# EUROPEAN PATENT APPLICATION

(11) **EP 1 006 491 A2**
(43) Date of publication of application: **07.06.2000**
(21) Application number: 99123274.5
(22) Date of filing: 30.11.1999
(51) Int. Cl.: G07F 7/10, G06K 17/00, G06K 19/077

(54) **Data processing system for IC cards, IC-card processing apparatus and IC-card processing method**

(30) Priority: 30.11.1998 JP 34000098
(71) Applicant: Hitachi, Ltd., Chiyoda-ku, Tokyo 101-8010 (JP); HITACHI TOKYO ELECTRONICS CO., LTD., Ome-shi Tokyo (JP)
(72) Inventor: Kusakabe, Kazutaka, Hadano-shi, Kanagawa-ken (JP); Takagi, Susumu, Sawa-gun, Gunma-ken (JP); Koide, Toshirou, Hadano-shi, Kanagawa-ken (JP); Mayuzumi, Hideaki, Tomioka-shi, Gunma-ken (JP); Fukuda, Hiroshi, Odawara-shi, Kanagawa-ken (JP)
(74) Representative: Beetz & Partner Patentanwälte

(57) **Abstract**

A handler (220a) writes predetermined data on a card for issuance of the card under control of a CPU (200a). A printing machine (220b) for printing predetermined information on the card surface is controlled by another CPU (200b). A packing machine (220c) for packing the printed card is controlled by still another CPU (200c). An issuance check module (301a), a printing module (301b) and a packing module (301c) corresponding to an issuing machine, the printing machine and the packing machine are downloaded in respective program storage areas of those CPUs from a host computer (300). With such a construction, there is provided a data processing system for IC cards which can issue, print and pack the IC cards with high versatility.

## Description

### BACKGROUND OF THE INVENTION

### 1. Field of the Invention

The present invention relates to a data processing system for IC cards, an IC card processing apparatus and an IC-card processing method which are used to, e.g., issue, print and pack IC cards.

### 2. Description of the Related Art

JP, A, 7-266754, for example, discloses one of known conventional IC-card fabricating apparatuses wherein a blank card having an image of face and character information, which are printed on it, and an IC card storing both the image of face and the character information are bonded to each other to fabricate a specific identification card. In another known apparatus disclosed in JP, A, 4-228592, for example, personal information is printed on the surface of a card in based on information written on the card.

IC cards have become widely put into practical use, but they are still in a transitory stage. Therefore, there are various types of cards, such as the non-contact close proximity, non-contact proximity, non-contact remote, contact, magnetic, and optical type, depending on schemes of the operating principles for reading and writing data. Also, depending on purposes intended for use of issued cards, there are various types of cards such as ID cards for personal identification, credit cards and prepaid cards. Those various types of cards have been conventionally fabricated by apparatuses dedicated for each of the schemes of the operating principles and the purposes intended for use. Thus, the conventional card fabricating apparatuses have a problem of lacking in versatility.

Further, data of visually readable information is printed and recorded on the surfaces of IC cards by using various printing schemes such as laser engraving, character printing, embossing, bar code printing, and photo-printing. But conventional apparatuses for printing those data are dedicated for each of the various printing schemes, and therefore also have a problem of lacking in versatility.

Moreover, IC cards having been issued and printed are packed by using various packing schemes such as shrink-wrapping, box packaging, folded-board packaging, and envelop packing. But conventional apparatuses for packing IC cards are dedicated for each of the various packing schemes, and therefore have a similar problem of lacking in versatility.

In short, a first problem faced in the relevant art is that conventional apparatuses for issuing, printing and packing IC cards are dedicated and lack versatility.

Additionally, IC cards are used for various purposes in the form of ID cards, credit cards and prepaid cards, and security management is very important in the process of, e.g., issuing the IC cards. A second problem faced in the relevant art is that security management is not sufficient in conventional IC-card issuing apparatuses, etc.

### SUMMARY OF THE INVENTION

A first object of the present invention is to provide a data processing system for IC cards, an IC card processing apparatus and an IC-card processing method , which can issue, print and pack the IC cards with high versatility.

A second object of the present invention is to provide a data processing system for IC cards, which can issue the IC cards with high security.

To achieve the above first object, a data processing system for IC cards according to the present invention comprises control means to control operations of a card issuing machine for writing predetermined data on the cards and issuing the cards, a printing machine for printing predetermined information on the surfaces of the cards, or a packing machine for packing the cards, the control means operating control programs corresponding to respective types of the card issuing, the printing or the packing, thereby controlling the issuing, printing or packing operations for the cards.

Also, to achieve the above first object, a data processing system for IC cards according to the present invention comprises a first processing section for performing a card issuing process corresponding to the type of the cards to be issued, a second processing section for performing a printing process corresponding to the type of printing made on the cards, and a third processing section for performing a card packing process, wherein control programs corresponding to the issuing process, the printing process and the packing process are loaded respectively in the first processing section, the second processing section and the third processing section from a program area in which control programs adapted for various types of issuing, printing and packing are stored beforehand, and the first processing section, the second processing section and the third processing section execute the issuing process, the printing process and the packing process in accordance with the loaded control programs, respectively.

Further, to achieve the above first object, a data processing system for IC cards according to the present invention comprises a card issuing machine for writing predetermined data on the cards and issuing the cards, a printing machine for printing predetermined information on the surfaces of the cards, and control means for controlling operations of the card issuing and the printing, the system further comprising higher control means for loading, in the control means, control programs corresponding to the type of the card issuing and the type of the printing.

The above features increase versatility of a data processing system for IC cards, which can issue, print and pack the IC cards.

In addition, to achieve the above second object, a data processing system for IC cards according to the present invention comprises an issuing machine for writing predetermined data on the cards and issuing the cards, a printing machine for printing predetermined information on the surfaces of the cards issued by the issuing machine, a packing machine for packing the cards printed by the printing machine, and control means for controlling operations of the issuing machine, the printing machine and the packing machine, the control means allowing only an authenticated operator to perform the card issuing operation.

With the above features, the IC cards can be issued with high security.

### BRIEF DESCRIPTION OF THE DRAWINGS

Fig. 1 is a block diagram showing an overall configuration of a data processing system for IC cards according to one embodiment of the present invention;
Fig. 2 is a block diagram showing a configuration of another example of a program area in the data processing system for IC cards according to the embodiment of the present invention;
Fig. 3 is a representation for explaining a summary of programs operating on a CPU in the data processing system for IC cards according to the embodiment of the present invention; and
Fig. 4 is a flowchart showing a process flow of overall operation of the data processing system for IC cards according to the embodiment of the present invention.

### DESCRIPTION OF THE PREFERRED EMBODIMENT

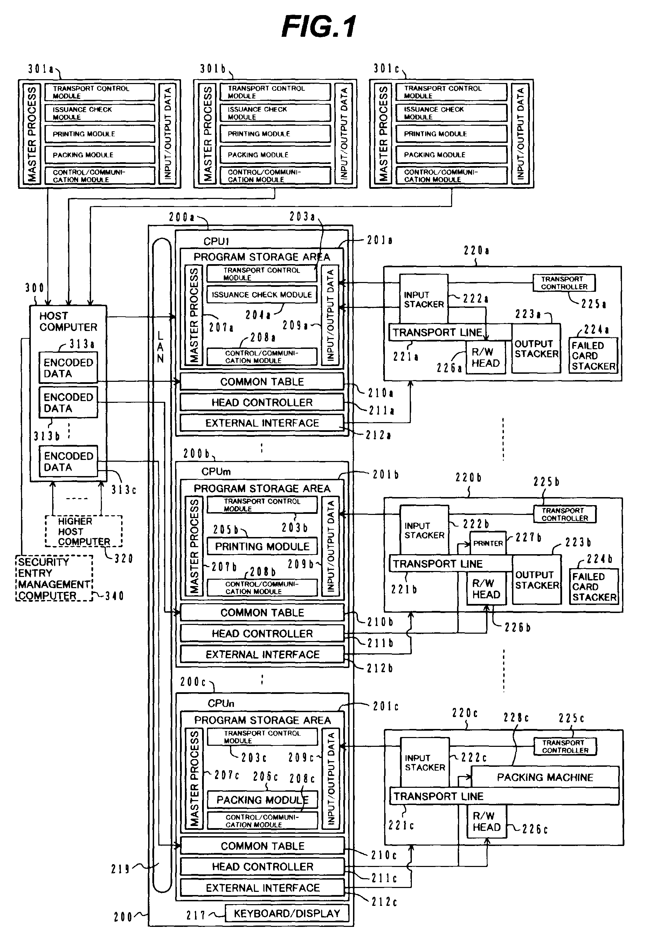

The overall configuration and operation of a data processing system for IC cards according to one embodiment of the present invention will be described below with reference to Figs. 1 to 4.

A description will be first made of the overall configuration of the data processing system for IC cards according to the embodiment of the present invention with reference to Fig. 1.

The data processing system of the embodiment comprises a tester main body 200, handlers 220a, 220b, 220c, a host computer (HST) 300, a higher host computer (MSYS) 320, and a security entry management computer (SCNTL) 340. These components are interconnected via control signal lines and data lines.

A plurality of CPUs 200a, 200b, 200c are compactly installed in the tester main body 200. The handlers 220a, 220b, 220c are used to carry out necessary processes, such as issuance, printing and packing of IC cards, while controlling transport of the IC cards. In the illustrated example, the handler 220a functions as an issuing machine for issuing IC cards, the handler 220b functions as a printing machine for printing data on the issued IC cards, and the handler 220c functions as a packing machine for packing the issued and printed IC cards. The handlers 220a, 220b, 220c are controlled respectively by the CPUs 200a, 200b, 200c in the tester main body 200. While the tester main body 200 is made up of the three CPUs 200a, 200b, 200c in the illustrated example, it is practically made up of, e.g., twenty CPUs and may be often made up of a larger number of CPUs. Also, the handlers 220a, 220b, 220c are shown as being separated from each other, but they may be integrated together such that one unit of handler executes the necessary processes throughout the operations of issuing, printing and packing IC cards. In this case, a CPU corresponding to that handler has functions capable of controlling all the operations of issuing, printing and packing IC cards.

The host computer (HST) 300 controls the plurality of CPUs 200a, 200b, 200c simultaneously. External interfaces 212a, 212b, 212c in the CPUs 200a, 200b, 200c are connected to the host computer (HST) 300 via a LAN 219. The higher host computer (MSYS) 320 provides an operation command to the entire data processing system according to the embodiment. The security entry management computer (SCNTL) 340 manages the whole of a room in which the data processing system for IC cards is installed, and sends entry-qualified person information to the host computer (HST).

Next, the configuration of the CPUs 200a, 200b, 200c constituting the tester main body 200 will be described.

The CPUs 200a, 200b, 200c constituting the tester main body 200 comprise respectively program storage areas 201a, 201b, 201c, common tables 210a, 210b, 210c, head controllers 211a, 211b, 211c, and external interfaces 212a, 212b, 212c.

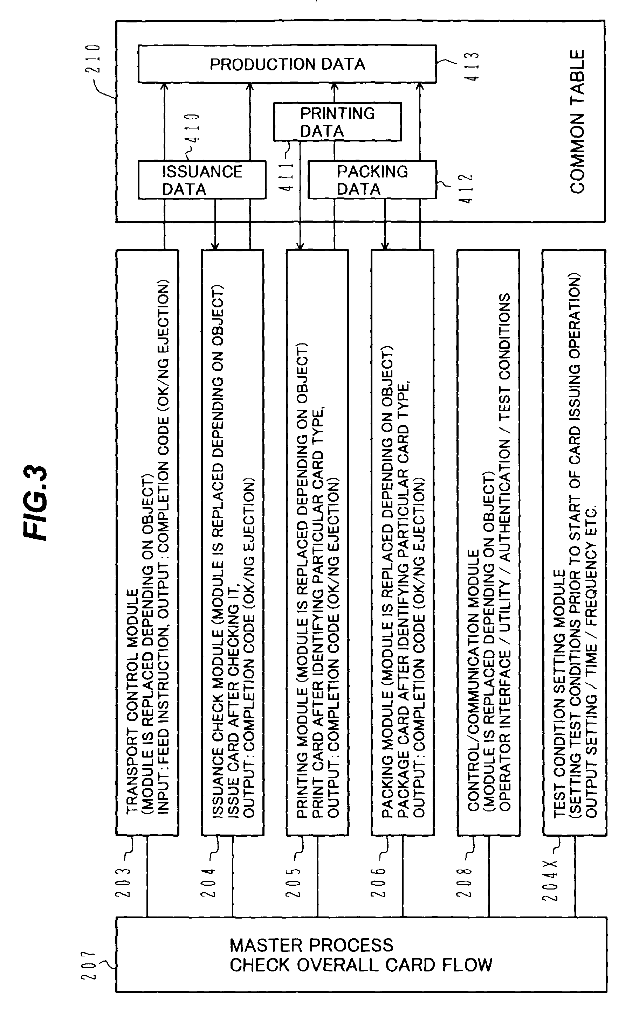

The program storage areas 201a, 201b, 201c are areas for storing IC-card processing programs. The programs stored in the program storage areas 201a, 201b, 201c can be changed depending on the intended uses of the handlers 220a, 220b, 220c. For example, in order for the handler 220a to function as an issuing machine for issuing IC cards, it comprises a transport control module 203a, an issuance check module 204a, a master process 207a, a control/communication module 208a, and a data input/output 209a. Details of each of the modules and so on will be described later with reference to Fig. 3. In order for the handler 220b to function as a printing machine for printing data on the issued IC cards, it comprises a transport control module 203b, a printing module 205b, a master process 207b, a control/communication module 208b, and a data input/output 209b. In order for the handler 220c to function as a packing machine for packing the issued and printed IC cards, it comprises a transport control module 203c, a packing module 206c, a master process 207c, a control/communication module 208c, and a data input/output 209c.

In accordance with prescribed operation commands, the host computer 300 reads the necessary modules from program areas 301a, 301b, 301c and stores them in the program storage areas 201a, 201b, 201c of the CPUs 200a, 200b, 200c, respectively. The prescribed operation command is, e.g., a command instructing that IC cards are issued by rendering the CPU 200a and the handler 220a to operate as an issuing machine for the IC cards. Upon receiving the command instructing that the CPU 200a and the handler 220a are employed as the IC-card issuing machine, the host computer 300 reads a transport control module, an issuance check module, a master process, a control/communication module, and a data input/output, followed by storing them in the program storage area 201a. Likewise, in accordance with the prescribed operation commands (that instruct printing, packing, etc.), the host computer 300 reads the necessary modules from the program areas 301a, 301b, 301c and stores them in the program storage areas 201b, 201c of the CPUs 200b, 200c as well. The program areas 301a, 301b, 301c are generally prepared in internal memories of the host computer 300.

As mentioned above, there are various schemes of the operating principles for reading and writing IC-card data, such as (1) the non-contact close proximity type, (2) the non-contact proximity type, (3) the non-contact remote type, (4) the contact type, (5) the magnetic type, and (6) the optical type. Accordingly, the issuance check module 204a requires to be changed depending on the schemes of the operating principles for reading and writing IC-card data. Also, there are various schemes of printing on the IC-card surfaces, such as (A) laser engraving, (B) character printing, (C) embossing, (D) bar code printing, and (E) photo-printing. Accordingly, the printing module 205b requires to be changed depending on the schemes of printing on the IC-card surfaces. Further, there are various schemes of packing IC cards, such as (a) shrink-wrapping, (b) box packaging, (c) folded-board packaging, and (d) envelop packing. Accordingly, the packing module 206c requires to be changed depending on the schemes of packing IC cards.

Among various combinations of the schemes of the operating principles for reading and writing IC-card data, the schemes of printing on the IC-card surfaces, and the schemes of packing IC cards, the following ones are more popularly employed. In one combination (1-B-b), the scheme of the operating principles for reading and writing IC-card data is (1) the non-contact close proximity type, the scheme for printing on the IC-card surfaces is (B) character printing, and the scheme for packing IC cards is (b) box packaging. In another combination (2-A-a), the scheme of the operating principles for reading and writing IC-card data is (2) the non-contact proximity type, the scheme for printing on the IC-card surfaces is (A) laser engraving, and the scheme for packing IC cards is (a) shrink-wrapping.

In view of the above, the modules corresponding to the combination (1-B-b), i.e., the issuance check module for (1) the non-contact close proximity type, the printing module for (B) character printing, and the packing module for (b) box packaging, are stored in the program area 301a. Also, the modules corresponding to the combination (2-A-a), i.e., the issuance check module for (2) the non-contact proximity type, the printing module for (A) laser engraving, and the packing module for (a) shrink-wrapping, are stored in the program area 301b. With the modules stored in such a way, the host computer 300 can control the handler 220a to operate as an issuing machine for the non-contact close proximity type by reading the issuance check module for (1) the non-contact close proximity type from the program area 301a and loading it as the issuance check module 204a in the program storage area 201a. Also, the host computer 300 can control the handler 220b to operate as a printing machine for character printing by reading the printing module for (B) character printing from the program area 301a and loading it as the printing module 205b in the program storage area 201b. Further, the host computer 300 can control the handler 220c to operate as a packing machine for box packaging by reading the packing module for (B) box packaging from the program area 301a and loading it as the packing module 206c in the program storage area 201c.

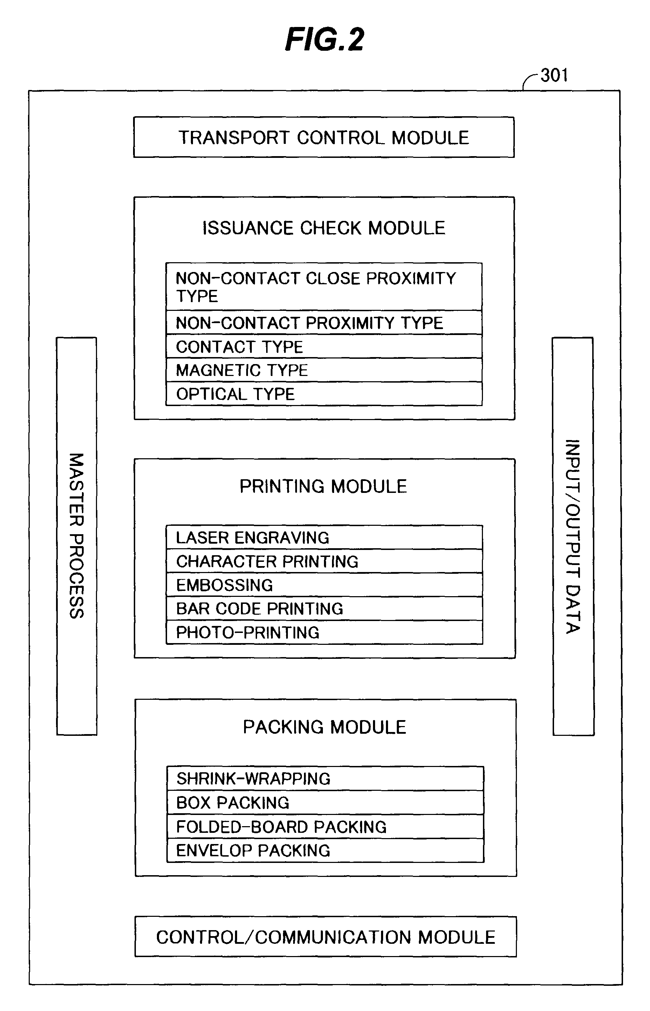

In the above description, the program areas 301a, 301b, 301c are provided to store the modules corresponding to the respective combinations of the schemes of issuance check, printing and packing. However, only one program area 301, for example, may be provided as shown in Fig. 2, and may store the issuance check modules adapted for all the schemes such as (1) the non-contact close proximity type, (2) the non-contact proximity type, (3) the non-contact remote type, (4) the contact type, (5) the magnetic type, and (6) the optical type, the printing modules adapted for all the schemes such as (A) laser engraving, (B) character printing, (C) embossing, (D) bar code printing, and (E) photo-printing, as well as the packing modules adapted for all the schemes such as (a) shrink-wrapping, (b) box packaging, (c) folded-board packaging, and (d) envelop packing. In this case, depending on the schemes of issuance check, printing and packing, the host computer 300 can control the handlers 220a, 220b, 220c to operate as an issuing machine of the non-contact close proximity type, a printing machine for character printing and a packing machine for box packaging, respectively, by reading the issuance check module for (1) the non-contact close proximity type from the program area 301 and loading it as the issuance check module 204a in the program storage area 201a, by reading the printing module for (B) character printing from the program area 301 and loading it as the printing module 205b in the program storage area 201b, and then by reading the packing module for (B) box packaging from the program area 301 and loading it as the packing module 206c in the program storage area 201c.

Therefore, IC cards utilizing the various schemes of the operating principles can be issued without changing the CPU 200a itself, thus resulting in increased versatility. The issuance check module 204a can also be easily changed depending on various purposes intended for the use of IC cards (such as ID cards for personal identification, credit cards and prepaid cards). Also, the system is adaptable for the various printing schemes without changing the CPU 200b itself, thus resulting in increased versatility. Further, the system is adaptable for the various packing schemes without changing the CPU 200c itself, thus resulting in increased versatility.

Furthermore, although the issuance check module 204a requires to be changed depending on, e.g., the schemes of the operating principles for reading and writing IC-card data (such as the non-contact close proximity, non-contact proximity, non-contact remote, contact, magnetic, and optical type), the issuance check module corresponding to the desired scheme of the operating principles can be loaded in the program storage area 201a by storing the issuance check modules for all the schemes of the operating principles in the program area 301a beforehand. Accordingly, IC cards utilizing the various schemes of the operating principles can be issued without changing the CPU 200a itself, thus resulting in increased versatility. The issuance check module 204a can also be easily changed depending on various purposes intended for the use of IC cards (such as ID cards for personal identification, credit cards and prepaid cards).

Likewise, the printing module 205b is adaptable for the various printing schemes without changing the CPU 200b itself by storing the printing modules for all the schemes of printing on the IC-card surfaces (such as laser engraving, character printing, embossing, bar code printing, and photo-printing) in the program area 301b beforehand and loading one of the stored printing modules in the program storage area 201b. This results in increased versatility.

Further, the packing module 206c is adaptable for the various packing schemes without changing the CPU 200c itself by storing the packing modules for all the schemes of packing IC cards (such as shrink-wrapping, box packaging, folded-board packaging, and envelop packing) in the program area 301c beforehand and loading one of the stored packing modules in the program storage area 201c. This results in increased versatility.

The common tables 210a, 210b, 210c in the CPUs 200a, 200b, 200c serve as areas for storing data. In accordance with the operation commands, the host computer 300 allocates encoded data 313a, 313b, 313c to the common tables 210a, 210b, 210c, respectively. The encoded data 313a, 313b, 313c are data required for carrying out respectively the operations of issuance, printing and packing. For example, if IC cards to be issued are ID cards, the encoded data 313a for issuance is given as personal ID information. Also, if IC cards to be issued are ID cards and photographs of faces of the IC-card possessors are printed on the surface of the IC cards, the encoded data 313b for printing is given as graphic data of the photographs of faces of the IC-card possessors. Further, if the IC cards having been issued and printed are packed by shrink-wrapping in units of five cards, the encoded data 313c for packing is given as data instructing "shrink-wrapping in units of five cards". If the destination of dispatch, etc. are printed on packages including packed IC cards, the encoded data 313c also includes data for the destination of dispatch, etc.

The encoded data 313a, 313b, 313c are sent from the higher host computer 320 to the host computer 300 along with the operation commands instructing the operations of issuance, printing and packing, and are stored in the host computer 300.

The head controllers 211a, 211b, 211c in the CPUs 200a, 200b, 200c control respectively R/W (read/write) heads 226a, 226b, 226c in the handlers 220a, 220b, 220c.

The external interfaces 212a, 212b, 212c of the CPUs 200a, 200b, 200c are connected to transport controllers 225a, 225b, 225c and the R/W heads 226a, 226b, 226c in the handlers 220a, 220b, 220c, as well as to the LAN 219.

In addition, the tester main body 200 includes a display/keyboard 217 for displaying the running status of the CPUs 200a, 200b, 200c and entering commands through it.

Next, the configuration of the handlers 220a, 220b, 220c will be described.

The handler 220a comprises a transport line 221a, an input stacker 222a, an output stacker 223a, a failed card stacker 224a, a transport controller 225a, and the R/W head 226a.

An IC card placed in the input stacker 222a and having no information, etc. recorded thereon is carried on the transport line 221a under control of the transport controller 225a. The transport controller 225a is controlled by the transport control module 203a in the CPU 300.

Midway the transport line 221a, data is written on the IC card by the R/W head 226a, and the written data is then read for checking a failure of the writing. The data to be written on the IC card is read out of the common table 210a by the head controller 211a, and is sent to the R/W head 226a via the data input/output 209a. Also, the writing and reading of data onto and from the IC card by the R/W head 226a are controlled by the issuance check module 204a in the CPU 200a.

If the IC card is determined to be not abnormal as a result of the reading and writing check, it is placed into the output stacker 223a by the transport controller 225a. If the IC card is determined to be abnormal as a result of the reading and writing check, it is placed into the failed card stacker 224a. Production data indicating that the IC card has been normally issued, and failure data indicating that the IC card has been abnormal are stored in the common table 210a by the issuance check module 204a each time 1000 pieces of IC cards are processed. The production data and the failure data are then sent to the host computer 300 via the external interface 212a and the LAN 219.

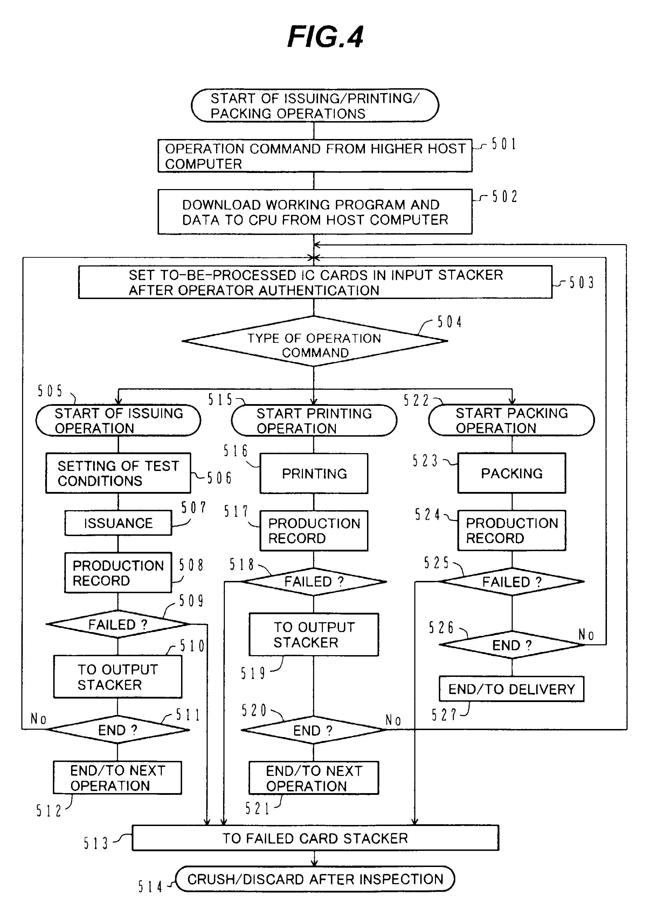

Further, the head controller 211a sends test level data to the R/W head 226a via the data input/output 209a. The test level data includes an output value (e.g., an output value of electrical waves when data is written and read onto and from the IC card with the electrical waves) from the R/W head 226a, frequency, and a protocol timeout value. The test level data can be set to individual values by setting test conditions in a test condition setting module within the issuance check module 204a, and the test conditions can be easily changed. Details of the test condition setting module will be described later with reference to Fig. 4. In the non-contact type, R/W head 226a comprises an antenna and a receiving/transmitting circuit.

The handler 220b comprises a transport line 221b, an input stacker 222b, an output stacker 223b, a failed card stacker 224b, a transport controller 225b, and the R/W head 226b. The transport line 221b, the input stacker 222b, the output stacker 223b, the failed card stacker 224b, and the transport controller 225b operate in a like manner to those in the handler 220a.

The IC card, which has been normally issued by the handler 220a and placed in the output stacker 223a, is placed in the input stacker 222b. Alternatively, the output stacker 223a may be itself moved to serve as the input stacker 222b.

The R/W head 226b reads the information already written on the IC card having been transferred with the transport line 221b. Assuming here that the IC card is an ID card, for example, the R/W head 226b reads the ID number of the possessor of the ID card. Also, assuming that a photograph of face of the ID-card possessor is to be printed on the surface of the IC card by a printer 227b, the printing module 205b reads, from the common table 210b, graphic data of the photograph of face corresponding to the ID number read by the R/W head 226b and sends the graphic data to the printer 227b, thereby enabling the photograph of face to be printed on the surface of the IC card. The printer 227b has a sensor for determining whether the printed image is good or not. The normally printed IC card is placed into the output stacker 223b, while the IC card failed in printing is placed into the failed card stacker 224b.

Production data indicating that the printing on the IC card has been normally completed, and failure data indicating that the printing on the IC card has failed are stored in the common table 210b by the printing module 205b. The production data and the failure data are then sent to the host computer 300 via the external interface 212b and the LAN 219.

The handler 220c comprises a transport line 221c, an input stacker 222c, a transport controller 225c, the R/W head 226c, and a packing machine 228c. The transport line 221c, the input stacker 222c, and the transport controller 225c operate in a like manner to those in the handler 220a.

The IC card, on which printing has been normally made by the handler 220b and placed in the output stacker 223b, is placed in the input stacker 222c. Alternatively, the output stacker 223b may be itself moved to serve as the input stacker 222c.

The R/W head 226c reads the information already written on the IC card having been transferred with the transport line 221b. Assuming here, by way of example, that the IC card is an ID card and particular ID cards are packed by shrink-wrapping in units of five cards, the R/W head 226c reads the ID numbers of the cards to check whether they are the ID cards to be packed. If the packing module 206c determines that the transferred cards are the ID cards to be packed, the packing machine 228c packs every five cards together by shrink-wrapping. The packing module 206c stores, in the common table 210c, production data when the IC cards to be packed have been normally packed, and failure data when the IC cards to be packed have not been transferred with the transport line 221c and hence have not been normally packed. The production data and the failure data are then sent to the host computer 300 via the external interface 212c and the LAN 219.

Additionally, the production data and the failure data about the issuing, printing and packing operations, which have been sent to the host computer 300, are further sent to the higher host computer 320.

Next, a summary of programs operating on the CPUs 200a, 200b, 200c in the data processing system for IC cards according to the embodiment will be described with reference to Fig. 3.

Fig. 3 is a representation for explaining a summary of programs operating on each CPU in the data processing system for IC cards according to the embodiment of the present invention.

The master process 207 controls an overall process flow through the transport control module 203, the issuance check module 204, the printing module 205, the packing module 206, the control/communication module 208, a test condition setting module 204X, and the common table 210.

The transport control module 203 can be selectively replaced from one to another corresponding to the handler 220a, 220b or 220c. The issuance check module 204 can be selectively replaced depending on the scheme of operation for issuing and checking IC cards with desired one of the modules adapted for, e.g., (1) the non-contact close proximity type, (2) the non-contact proximity type, (3) the non-contact remote type, (4) the contact type, (5) the magnetic type, and (6) the optical type. The printing module 205 can be selectively replaced depending on the type of the printer 227 with desired one of the modules adapted for, e.g., (A) laser engraving, (B) character printing, (C) embossing, (D) bar code printing, and (E) photo-printing. The packing module 206 can be selectively replaced depending on the type of the packing machine 228 with desired one of the modules adapted for, e.g., (a) shrink-wrapping, (b) box packaging, (c) folded-board packaging, and (d) envelop packing.

The control method can be changed by replacing the master process 207 depending on the intended purpose, whereby the system is adaptable for enhancement of the function. The control/communication method can be changed by replacing the control/communication module 208 depending on the intended purpose, whereby the system is adaptable for enhancement of the function. The test conditions can be changed by replacing the test condition setting module 204X depending on the intended purpose, whereby the system is adaptable for enhancement of the function. The capacity and format can be changed by replacing the common table 210 depending on the intended purpose, whereby the system is adaptable for enhancement of the function.

In accordance with transport control commands from the issuance check module 204, the printing module 205 and the packing module 206, the transport control module 203 controls the transport controller 225a, 225b or 225c in the handler 220a, 220b or 220c to selectively deliver the IC card under transport into the output stacker 223a, 223b or the failed card stacker 224a, 224b. Here, transport status information is stored as a part of production data 413 in the common table 210.

In accordance with issuance data 410 in the common table 210, the issuance check module 204 outputs IC-card data processing information to issue IC cards, and depending on a result of the issuing operation, it instructs good cards to be placed in the output stacker 223a or 223b and failed cards to be placed in the failed card stacker 224a or 224b. Issuance status information is stored as a part of the production data 413 in the common table 210.

In accordance with printing data 411 in the common table 210, the printing module 205 outputs IC-card printing information to perform printing on IC cards, and depending on a result of the printing operation, it instructs good cards to be placed in the output stacker 223b and failed cards to be placed in the failed card stacker 224b. Printing status information is stored as a part of the production data 413 in the common table 210.

In accordance with packing data 412 in the common table 210, the packing module 206 outputs IC-card packing unit information and printing information to perform packing of IC cards and label-printing on the packed IC cards. Packing operation information is stored as a part of the production data 413 in the common table 210.

The control/communication module 208 functions to set the test conditions in the test condition setting module 204X from the display/keyboard 217, to monitor execution of the programs operating on the CPU, and to serve as an operator interface for referring to the production data 413 in the common table 210.

Next, a process flow of the overall operation of the data processing system for IC cards according to the embodiment will be described with reference to Fig. 4.

Fig. 4 is a flowchart showing a process flow of the overall operation of the data processing system for IC cards according to the embodiment of the present invention.

### (General Process)

In step 501, the host computer 300 receives the operation commands for issuance, printing and packing from the higher host computer 320. When the input stacker 222 including a lot of cards is set in place, a bar code put on a side of the input stacker 222 is read and the type of the set cards is reported from the transport controller 225 to the host computer 300 via the external interface 212.

The following description will be made on an assumption that the type of the cards set in the input stacker 222 corresponds to the aforesaid combination (1-B-b), i.e., that the scheme of the operating principles for reading and writing IC-card data is (1) the non-contact close proximity type, the scheme for printing on the IC-card surfaces is (B) character printing, and the scheme for packing IC cards is (b) box packaging. Further, depending on the card type, the R/W heads 226a, 226b, 226c, the printer 227b, and the packing machine 228c require to be replaced with desired ones. In the case of the above combination (1-B-b), for example, the R/W heads 226a, 226b, 226c are replaced with R/W heads of the non-contact close proximity type, the printer 227b is replaced with a character printer, and the packing machine 228c is replaced with a packing machine for box packaging. The R/W heads 226a, 226b, 226c, the printer 227b, and the packing machine 228c can be easily replaced by employing R/W heads, printers, and packing machines constructed in the replaceable cartridge form.

Then, in step 502, the host computer 300 reads the issuance check module for (1) the non-contact close proximity type from the program area 301a and loads it in the program storage area 201a of the CPU 200a for executing the issuing operation, thereby setting the issuance check module 204a to function as an operation program, and also loads the encoded data 313a in the common table 210a. Likewise, the host computer 300 reads the transport control module, the master process, the control/communication module, and the data input/output from the program area 301a, and loads them in the program storage area 201a of the CPU 200a to function respectively as the transport control module 203a, the master process 207a, the control/communication module 208a, and the data input/output 209a.

As with the above, the host computer 300 reads the printing module for (B) character printing from the program area 301a and loads it in the program storage area 201b of the CPU 200b for executing the printing operation, thereby setting the printing module 205b to function as an operation program, and also loads the encoded data 313b in the common table 210b. Likewise, the host computer 300 reads the transport control module, the master process, the control/communication module, and the data input/output from the program area 301a, and loads them in the program storage area 201b to function respectively as the transport control module 203b, the master process 207b, the control/communication module 208b, and the data input/output 209b. Further, the host computer 300 reads the packing module for (b) box packaging from the program area 301a and loads it in the program storage area 201c of the CPU 200c for executing the packing operation, thereby setting the packing module 206c to function as an operation program, and also loads the encoded data 313c in the common table 210c. Likewise, the host computer 300 reads the transport control module, the master process, the control/communication module, and the data input/output from the program area 301a, and loads them in the program storage area 201c to function respectively as the transport control module 203c, the master process 207c, the control/communication module 208c, and the data input/output 209c.

Subsequently, when an operator enters his or her own authentication code from the display/keyboard 217 of the tester main body 200 in step 503, the entered code is compared in the control/communication module 208 with the authentication code registered in beforehand, and is further compared with the entry-qualified person authentication codes received from the security entry management computer 340 via the host computer 300. After the operator authentication has been successfully completed, the operator sets, in the input stacker 222a, IC cards of the non-contact close proximity type which are to be subjected to the subsequent operation.

Thus, only when the entered authentication code of the operator coincides with the authentication code registered beforehand and then with one of the entry-qualified person authentication codes as a result of two-step comparison checks, the operator authentication is successfully completed and the operator is allowed to commence the subsequent operation of, e.g., issuing IC cards. Therefore, the accuracy of security management can be increased. Also, since the issuance check module, the printing module and the packing module, which have been downloaded in the program storage areas 200a, 200b, 200c, are protected to be not altered or forged even by the authenticated operator, the reliability of security is further increased.

Then, depending on the type of the operation command determined in step 504, the process flow goes to the issuing operation subsequent to step 505, the printing operation subsequent to step 515, or the packing operation subsequent to step 522. Processes of those operations will be described below one by one.

### (Process of Issuing Operation)

In step 505, the CPU 200a starts the process of operation for issuing IC cards.

Then, in step 506, the issuance check module 204a designates the test condition setting module 204X storing the test conditions, such as a setting value of output for access to the IC cards of the non-contact close proximity type, frequency, and a protocol timeout value, which have been set through the display/keyboard 217 beforehand, and sets the designated values in the R/W head 226a.

Subsequently, when the IC cards are set in the input stacker 222a in step 507, the transport controller 225a transports the cards on the transport line 221a one by one, and stops each card at the position of the R/W head 226a. The transport controller 225a reports information, indicating that the card has been set in place, to the issuance check module 204a via the data input/output 209a in the issuance check module 204a. Under the conditions set in step 506, after checking the memory and function of the card to be accessed, the issuance check module 204a executes data processing (e.g., writing ID information when the card is an ID card) from the encoded data stored in the common table 210a for data processing, thereby issuing the IC card.

Thereafter, in step 508, the issuance check module 204a stores, in the common table 210a, production records including not only specific production data ascertained during the data processing, such as the number of cards produced, the serial number of each card, etc., but also specific failure data including, e.g., codes and causes of failures occurred during the data processing.

Then, in step 509, the issuance check module 204a determines whether any failure has occurred on the card during the data processing and after the end thereof. For the failed card, in step 513, the issuance check module 204a instructs the transport controller 225a via the external interface 212a to eject the failed card into the failed card stacker 224a, whereby the failed card is ejected.

For the good card, in step 510, the issuance check module 204a instructs the transport controller 225a to eject the good card into the output stacker 223a, whereby the good card is ejected.

In step 511, the issuance check module 204a determines whether any of the encoded data for data processing allocated in lot remains in the common table 210a, and whether any card not yet processed remains in the input stacker 222a. If any of the encoded data or any card not yet processed remains, the transport controller 225a withdraws the next card to be processed from the input stacker 222a, and stops that card at the position of the R/W head 226a, followed by repeating the above-described process again.

After the cards in the input stacker 222a have been all processed, the transport controller 225a exchanges the input stacker 222a with a new one in step 512, and repeats the above-described process again. Then, when the encoded data stored in the common table 210a for data processing of 1000 cards has been all processed, the issuance check module 204a transmits the production data and the failure data of the 1000 cards, both accumulated in the common table 210a, to the host computer 300 and receives new encoded data for data processing, followed by repeating the above-described process again. If there is no new encoded data for data processing and a completion code is received, the issuing operation by the issuance check module 204a is ended.

After the end of the issuing operation, if the thus-issued IC cards of the non-contact close proximity type require the printing and packing operations, the processes of the printing operation (step 515) and the packing operation (step 522) are executed.

While the above description has been made as using the R/W head 226a for IC cards of the non-contact close proximity type and the issuance check module 204a, a wide range of data processing can be implemented by replacing the R/W head 226a for IC cards of the non-contact close proximity type with another R/W head for IC cards of any of the non-contact proximity, the non-contact remote, contact, magnetic, and optical type, and replacing the issuance check module 204a with another one corresponding to the selected R/W head.

### (Process of Printing Operation)

In step 515, the CPU 200b starts the process of operation for issuing IC cards.

Subsequently, when the IC cards are set in the input stacker 222b in step 516, the transport controller 225b transports the cards one by one, and stops each card at the position of the R/W head 226b. The transport controller 225b reports information, indicating that the card has been set in place, to the printing module 205b via the data input/output 209b in the printing module 205b. Then, the printing module 205b reads specific information of the card from the encoded data stored in the common table 210a for printing, and prints the read information on the card using the printer 227b.

In step 517, the printing module 205b stores, in the common table 210b, production records including not only specific production data ascertained during the data processing, such as the number of cards produced, the serial number of each card, etc., but also specific failure data including, e.g., codes and causes of failures occurred during the data processing.

Then, in step 518, the printing module 205b determines whether any failure has occurred on the card during the data processing and after the end thereof. For the printing-failed card, in step 513, the printing module 205b instructs the transport controller 225b via the external interface 212b to eject the failed card into the failed card stacker 224b, whereby the failed card is ejected.

For the good card, in step 519, the printing module 205b instructs the transport controller 225b to eject the good card into the output stacker 223b, whereby the good card is ejected.

In step 520, the printing module 205b determines whether any of the encoded data for data processing allocated in lot remains in the common table 210b, and whether any card not yet processed remains in the input stacker 222b. If any of the encoded data or any card not yet processed remains, the transport controller 225b withdraws the next card to be processed from the input stacker 222b, and stops that card at the position of the R/W head 226b, followed by repeating the above-described process again.

After the cards in the input stacker 222b have been all processed, the transport controller 225b exchanges the input stacker 222b with a new one in step 521, and repeats the above-described process again. Then, when the encoded data stored in the common table 210b for data processing of 1000 cards has been all processed, the printing module 205b transmits the production data and the failure data of the 1000 cards, both accumulated in the common table 210b, to the host computer 300 and receives new encoded data for data processing, followed by repeating the above-described process again. If there is no new encoded data for data processing and a completion code is received, the printing operation by the printing module 205b is ended.

After the end of the printing operation, if the thus-printed IC cards of the non-contact close proximity type require the packing operation, the process of the packing operation (step 522) is executed.

While the above description has been made as using the printer 227b and the printing module 205b, a wide range of printing can be implemented by replacing the printer 227b for character printing machine with any of machines for laser engraving, embossing, bar code printing and photo-printing, and replacing the printing module 205b with another one corresponding to the selected machine.

### (Process of Packing Operation)

In step 522, the CPU 200c starts the process of operation for packing IC cards.

Subsequently, when the IC cards are set in the input stacker 222c in step 523, the transport controller 225c transports the cards one by one, and stops each card at the position of the R/W head 226c. The transport controller 225c reports information, indicating that the card has been set in place, to the packing module 206c via the data input/output 209c in the packing module 206c. Then, the packing module 206c reads specific information of the card from the encoded data stored in the common table 210c for packing, and packs the cards in accordance with the read information using the packing machine 228c for shrink-wrapping.

In step 524, the packing module 206c stores, in the common table 210c, production records including not only specific production data ascertained during the data processing, such as the number of cards produced, the serial number of each card, etc., but also specific failure data including, e.g., codes and causes of failures occurred during the data processing.

Then, in step 525, the packing module 206c determines whether any failure has occurred on the card during the data processing and after the end thereof. For the packing-failed card, in step 513, the packing module 206c instructs the transport controller 225c via the external interface 212c to eject the failed card into the failed card stacker 224b, whereby the failed card is ejected.

In step 526, the packing module 206c determines whether any of the encoded data for data processing allocated in lot remains in the common table 210c, and whether any card not yet processed remains in the input stacker 222c. If any of the encoded data or any card not yet processed remains, the transport controller 225c withdraws the next card to be processed from the input stacker 222c, and stops that card at the position of the R/W head 226c, followed by repeating the above-described process again.

After the cards in the input stacker 222c have been all processed, the transport controller 225c exchanges the input stacker 222c with a new one in step 528, and repeats the above-described process again. Then, when the encoded data stored in the common table 210c for data processing of 1000 cards has been all processed, the packing module 206c transmits the production data and the failure data of the 1000 cards, both accumulated in the common table 210c, to the host computer 300 and receives new encoded data for data processing, followed by repeating the above-described process again. If there is no new encoded data for data processing and a completion code is received, the packing operation by the packing module 206c is ended.

While the above description has been made as using the packing machine 228c and the packing module 206c, a wide range of packing can be implemented by replacing the packing machine 228c for shrink-wrapping with any of machines for box packaging, folded-board packaging, and envelop packing, and replacing the packing module 206c with another one corresponding to the selected machine.

Further, in step 514, the failed cards occurred in the issuing operation, the failed cards occurred in the printing operation, and the failed cards occurred in the packing operation are crushed in the failed card stacker if so instructed with security commands from the issuing/printing/packing modules. If there are no security commands, the failed cards are released from the security guard and can be discarded in a predetermined way.

Assuming that after the above processes of the issuing, printing and packing operations under the combination (1-B-b) in which the scheme of the operating principles for reading and writing IC-card data is (1) the non-contact close proximity type, the scheme for printing on the IC-card surfaces is (B) character printing, and the scheme for packing IC cards is (b) box packaging, the operator sets, in the input stacker 222, the type of the cards corresponding to the aforesaid combination (2-A-a) in which the scheme of the operating principles for reading and writing IC-card data is (2) the non-contact proximity type, the scheme for printing on the IC-card surfaces is (A) laser engraving, and the scheme for packing IC cards is (a) shrink-wrapping. In this case, the process of step 501 is started as follows.

Corresponding to the combination (2-A-a) in which the scheme of the operating principles for reading and writing IC-card data is (2) the non-contact proximity type, the scheme for printing on the IC-card surfaces is (A) laser engraving, and the scheme for packing IC cards is (a) shrink-wrapping, the R/W heads 226a, 226b, 226c are replaced with R/W heads of the non-contact proximity type, the printer 227b is replaced with a laser engraving machine, and the packing machine 228c is replaced with a shrink-wrapping machine.

Then, in step 502, the host computer 300 reads the issuance check module for (2) the non-contact proximity type from the program area 301b and loads it in the program storage area 201a of the CPU 200a for executing the issuing operation, thereby setting the issuance check module 204a to function as an operation program, and also loads the encoded data 313a in the common table 210a. At this time, the old issuance check module 204a and the old common table 210a are deleted.

Similarly, the host computer 300 reads the printing module for (A) laser engraving from the program area 301b and loads it in the program storage area 201b of the CPU 200b for executing the printing operation, thereby setting the printing module 205b to function as an operation program, and also loads the encoded data 313b in the common table 210b. At this time, the old printing module 205b and the old common table 210b are deleted. Further, the host computer 300 reads the packing module for (a) shrink-wrapping from the program area 301b and loads it in the program storage area 201c of the CPU 200c for executing the packing operation, thereby setting the packing module 206c to function as an operation program, and also loads the encoded data 313c in the common table 210c. At this time, the old packing module 206c and the old common table 210c are deleted. Processes subsequent to step 503 are executed in a like manner to the case described above.

With the embodiment, as described above, a wide variety of card processing can be achieved by replacing a card accessing head, which is provided on a card issuing machine and operates in accordance with a loaded issuance check program, with a desired one of heads for cards of the non-contact close proximity, non-contact proximity, non-contact remote, contact, magnetic, and optical type, and by replacing the issuance check program with one corresponding to the selected head.

Also, a wide variety of card processing can be achieved by replacing a printing machine to perform a printing function with a desired one of machines for laser engraving, character printing, embossing, bar code printing, and photo-printing, and by replacing a printing program with one corresponding to the selected printing machine.

Further, a wide variety of card processing can be achieved by replacing a packing machine to perform a packing function with a desired one of machines for shrink-wrapping, box packaging, folded-board packaging, and envelop packing, and by replacing a packing program with one corresponding to the selected packing machine.

Since a plurality of issuing machines, a plurality of printing machines and a plurality of packing machines are each selectively operated under centralized control of a processing apparatus, card products having different specifications (intended purposes) can be processed by using the same processing apparatus.

Moreover, only an operator is allowed to start the card issuing operation who has been authenticated double by comparing an entered code with the predetermined authentication code received from the processing apparatus controlling the various machines in a centralized manner and by comparing the entered code with the entry-qualified person management information for a security room in which the various machines are installed. Accordingly, a higher level of security can be ensured. As a result, the data processing system of the present invention can issue cards efficiently and inexpensively with check functions adapted for various applications of the cards.

Since a test condition setting module storing preset test conditions is designated from the issuance check program for operation of the card accessing head which can control an output value, frequency and a protocol timeout value, the issuing operation can be executed under the predetermined check conditions.

A program loaded in the processing apparatus performs data processing based on encoded data received from a higher processing apparatus, and accumulates and analyzes not only specific production data ascertained during the data processing, such as the number of cards produced, the serial number of each card, etc., but also specific failure data including, e.g., codes and causes of failures occurred during the data processing. Therefore, good cards and failed cards can be selected and ejected separately depending on the analyzed results.

Additionally, upon an operator individually setting the test conditions from an input unit of a tester body, the issuance check program designates one or more test condition setting modules storing the test conditions for IC cards, such as a head output value, frequency and a protocol timeout value, prior to access to the cards depending on the designated operation for reading and writing, whereby the individual operations can be checked and effected as per intended.

According to the present invention, a data processing system for IC cards is provided which can issue, print and pack the IC cards with high versatility.

Also, the IC cards can be issued with high security.

## Claims

1. A data processing system for IC cards, comprising control means (200, 300) to control operations of a card issuing machine (220a) for writing predetermined data on the cards and issuing the cards, a printing machine (220b) for printing predetermined information on the surfaces of the cards, or a packing machine (220c) for packing the cards,
said control means operating control programs corresponding to respective types of card issuing, printing or packing, thereby controlling the issuing, printing or packing operations for the cards.

2. A data processing system for IC cards, comprising:
a first processing section (200a) for performing a card issuing process corresponding to the type of the cards to be issued,
a second processing section (200b) for performing a printing process corresponding to the type of printing made on the cards, and
a third processing section (200c) for performing a card packing process,
wherein control programs corresponding to the issuing process, the printing process and the packing process are loaded respectively in said first processing section, said second processing section and said third processing section from a program area (301) in which control programs adapted for various types of issuing, printing and packing are stored beforehand, and
said first processing section, said second processing section and said third processing section execute the issuing process, the printing process and the packing process in accordance with the loaded control programs, respectively.

3. A data processing system for IC cards, comprising a card issuing machine (220a) for writing predetermined data on the cards and issuing the cards, a printing machine (220b) for printing predetermined information on the surfaces of the cards, and control means (200) for controlling operations of said card issuing machine and said printing machine,
said system further comprising higher control means (300) for loading, in said control means, control programs corresponding to the type of said card issuing.

4. A data processing system for IC cards according to claim 3, wherein said control means is able to issue various types of cards adapted for different uses based on data stored in said higher control means corresponding to intended uses of the cards.

5. A data processing system for IC cards according to claim 3, wherein said control means includes a test condition setting program storing test conditions for the IC cards, and checks the IC cards under the test conditions set in said test condition setting program.

6. A data processing system for IC cards, comprising an issuing machine (220a) for writing predetermined data on the cards and issuing the cards , a printing machine (220b) for printing predetermined information on the surfaces of the cards issued by said issuing machine, a packing machine (220c) for packing the cards printed by said printing machine, and control means (200) for controlling operations of said issuing machine, said printing machine and said packing machine,
said control means allowing only an authenticated operator to perform the card issuing operation.

7. A data processing system for IC cards according to claim 6, further comprising management means (340) for managing entry of operators into a room in which said data processing system is arranged,
wherein said control means allows only an operator, who has been authenticated based on entry-qualified person information provided from said management means, to perform the card issuing operation.

8. An IC-card processing apparatus including a central processing unit (CPU) (200a) having a program storage area (201a) and a head controller (211a), said central processing unit being connectable to a processing mechanism (220a) which has an R/W head (226a) and processes IC cards,
said program storage area storing information corresponding to an operation process to be performed by said processing mechanism, and
said head controller outputting a signal to control said R/W head to read information recorded on each IC card, and in accordance with the read information of the IC card, outputting a control signal adapted for the operation process to be performed on the IC card from information stored in said program storage area.

9. An IC-card processing apparatus according to claim 8, wherein said processing apparatus is connectable to a plurality of processing mechanisms, and
said processing apparatus includes a plurality of central processing units (200a,b,c) far storing information corresponding to operation processes to be performed by said plurality of processing mechanisms, and controlling the operation processes.

10. An IC-card processing method comprising:
a step of writing information on an IC card,
a first reading step of reading the written information from the IC card, and
a step of determining whether the IC card is good or not based on the information read in said first reading step.

11. An IC-card processing method according to claim 10, further comprising:
a second reading step of reading the written information from the IC card,
a step of printing data on the IC card based on the information read in said second reading step, and
a step of determining whether a result of said printing is good or not.

12. An IC-card processing method according to claim 11, further comprising:
a third reading step of reading the written information from the IC card,
a step of packing the IC card based on the information read in said third reading step, and
a step of determining whether a result of said packing is good or not.
